# EUROPEAN PATENT SPECIFICATION

(11) **EP 0 607 695 B1**
(45) Date of publication and mention of the grant of the patent: **05.02.1997**
(21) Application number: 93310459.8
(22) Date of filing: 23.12.1993
(51) Int. Cl.: B60C 23/06

(54) **Method and device for detecting pneumatic abnormalities of a tyre**
Verfahren und Vorrichtung zum Erkennen von Reifenfehlern
Procédé et dispositif de détection d'anomalies de gonflage pour pneumatiques

(30) Priority: 24.12.1992 JP 344104/92; 28.12.1992 JP 347669/92
(43) Date of publication of application: 27.07.1994
(73) Proprietor: Sumitomo Rubber Industries Ltd., Kobe-shi, Hyogo-ken (JP)
(72) Inventor: Kishimoto, Yoshikazu, Kakogawa Green City D302, Kakogawa-shi, Hyogo-ken (JP); Yanase, Manao, Kobe-shi, Hyogo-ken (JP)
(74) Representative: Stewart, Charles Geoffrey

(56) References cited:
- EP-A- 0 083 771
- EP-A- 0 291 217
- FR-A- 2 271 063

## Description

The present invention relates to a method and a device for detecting pneumatic abnormalities of a tyre on a vehicle such as a car or a truck. More particularly, the invention relates to a method and a device capable of reducing cost by the use of the wheel speed pulses in an ABS (Anti-lock Braking System) and of detecting simply and reliably simultaneous abnormality of not less than two wheels at minimum increase of cost by installing a pneumatic pressure detector to a wheel.

Pneumatic pressure of tyres greatly influences the performance of vehicles. More particularly deflation of tyres has a close relation to safety for drivers. Hence, many systems for detecting pneumatic abnormalities of a tyre have been proposed. However, these proposals could not realise both high reliability and low cost so that they have not been widely used. Recently, with the spread of ABS, there has been proposed a system with low cost and high reliability wherein the wheel speed pulses in the ABS are utilised. Although the system is reliable in detecting abnormality of one tyre, it is not reliable to simultaneous detect abnormality of two or more tyres.

In the meanwhile, devices for detecting pneumatic abnormalities are classified into several types according to their detection methods. One type of device directly measures the pneumatic pressure of tyres and the other detects a physical quantity such as the amount of deflection or numbered revolutions both of which change with pneumatic pressure. The invention is related to the latter type as disclosed e.g. in EP-A-0 291 217 and EP-A-0 083 771.

The former is more reliable than the latter but the device is complicated and expensive because transmission of signals from a rotating body to a static section is difficult. On the other hand, the latter is simple and cheap but it is less reliable than the former.

Also, in systems for detecting pneumatic abnormalities on the basis of wheel speed, abnormalities of tyres are generally determined by the comparison between the wheel speed pulses of the abnormal pneumatic tyre and those of a normal pneumatic tyre. Accordingly, the pneumatic pressure of at least on tyre must be normal, so that the simultaneous abnormality of all wheels cannot be detected theoretically.

In view of the above state of the art, it is an object of the present invention to provide a method and a device for detecting pneumatic abnormalities of a tyre whose cost is low and which has high reliability and can detect simultaneous abnormalities of all wheels on a vehicle.

According to the present invention, there is provided a method for detecting pneumatic abnormalities of tyre on a vehicle, the method comprising the steps of:
(a) detecting the angular velocity of each wheel,
(b) producing signals proportional to the detected angular velocities,
(c) directly measuring the pneumatic pressure of only one wheel of the vehicle,
(d) producing a signal proportional to the detected pneumatic pressure, and
(e) arithmetically processing the signals produced in the steps (b) and (d)
wherein with respect to the directly detected wheel, the step (e) comprises:
operating a device which warns of pneumatic abnormalities of a tyre when a difference between the detected pneumatic pressure and a predetermined normal pneumatic pressure is not less than 0.3 kg/cm²; and
wherein with respect the other wheels, when the detected pneumatic pressure is normal, step (e) comprises:
obtaining ratios of respective angular velocities of the other wheels to an angular velocity of the directly detected wheel,
comparing the obtained ratios with a ratio in a table of wheel angular velocity ratios under normally inflated conditions on the basis of the angular velocity of the detected wheel in step (c)
comparing the angular velocity of the other wheel and an average value of angular velocities of all the wheels, and
operating a device which warns of pneumatic abnormalities of a tyre when the difference between the compared ratios ranges from 0.05 % to 0.60% or when the difference between the angular velocity of the other wheel and the average value of angular velocities of all the wheels ranges from 0.05% to 0.60%, and when a pneumatic abnormality of the directly detected wheel is warned, the method further comprises a step (f) of:
   obtaining the vehicle speed from a table wherein the relation between pneumatic pressure and angular velocity is shown,
   obtaining an angular velocity for the directly detected wheel under normal pneumatic pressure, corresponding to the obtained vehicle speed, and
   obtaining ratios of respective angular velocities of the other wheels to this angular velocity so that the deflated tyre can be identified.

The method of the present invention preferably includes a step (g) of directly measuring and monitoring the acceleration of the vehicle in a lateral direction, and a step (h) of invalidating the data of angular velocity of each wheel when the absolute value of the acceleration in the lateral direction exceeds 0.06g (g: gravity).

Further, the method of the present invention, may include a step (i) of directly measuring and monitoring the acceleration of a vehicle in a forward or backward direction, and a step (j) of invalidating the data for angular velocity of each wheel when the absolute value of the acceleration in the forward to backward direction exceeds 0.03g.

Moreover, the method of the present invention may include a step (k) of invalidating the data for the angular velocity of each wheel when a vehicle brake pedal is pressed and/or a step (l) of measuring the throttle opening, differentiating the measured value, and monitoring the differentiated value, and a step (m) of invalidating the data for the angular velocity of each wheel when the differentiated value exceeds 100% sec.

In accordance with the present invention, there is also provided a device for detecting pneumatic abnormalities of a tyre on a vehicle comprising:
angular velocity detecting means for detecting the angular velocity of each wheel,
angular velocity signal producing means for producing signals proportional to the detected angular velocities,
pneumatic pressure detecting means for directly detecting the pressure of only one wheel of the vehicle,
pneumatic pressure signal producing means for producing a signal proportional to the obtained pneumatic pressure;
arithmetically processing means for arithmetically processing the signals from the angular velocity signal producing means and the pneumatic pressure signal producing means,
wherein with respect to the directly detected wheel, the arithmetically processing means operates a device which warns of a pneumatic abnormality of tyre when the difference between the detected pneumatic pressure and a predetermined normal pneumatic pressure is not less than 0.3 Kg/cm²; and wherein with respect to the other wheels, when the detected pneumatic pressure is normal, the arithmetical processing means obtains ratios of the respective velocities of the other wheels to the angular velocity of the directly detected wheel,
compares the obtained ratios with a ratio in a table of wheel angular velocity ratios under the normally inflated condition on the basis of the angular velocity of the directly detected wheel,
compares the angular velocity of the other wheel and an average value of angular velocities of all the wheels, and
operates a device which warns of pneumatic abnormality of a tyre when the difference between the compared ratios ranges from 0.05% to 0.06% or when the difference between the angular velocity of the other wheel and an average value of angular velocities of all the wheels ranges from 0.05% to 0.06%, and
an identifying means wherein when pneumatic pressure of the directed detected wheel is abnormal, the means obtains vehicle speed from a table wherein the relation between pneumatic pressure and angular velocity is shown,
obtains an angular velocity for the directly detected wheel under normal pneumatic pressure, corresponding to the obtained vehicle speed, and
obtains ratios of respective angular velocities of the other wheels to this angular velocity so that the deflated tyre can be identified.

The device of the present invention preferably includes means for directly measuring and monitoring the acceleration of the vehicle in a lateral direction, and means for invalidating the data for the angular velocity of each wheel when the absolute value of the acceleration in the lateral direction exceeds 0.06 g (g: gravity).

Further, the device of the present invention preferably includes means for directly measuring and monitoring the acceleration of the vehicle in a forward or backward direction, and means for invalidating the data for the angular velocity of each wheel when the absolute value of the acceleration in the forward or backward direction exceeds 0.03 g.

Moreover, the device of the present invention preferably includes means for invalidating the data for the angular velocity of each wheel when a vehicle brake pedal is pressed and/or means for measuring throttle opening, differentiating the measured value, and monitoring the differentiated value, and means for invalidating the data for the angular velocity of each wheel when the differentiated value exceeds 100 % sec.

Thus by the present invention for one of the wheels on a vehicle, deflation is detected by directly measuring the pneumatic pressure thereof, and for the other wheels, deflation is detected by the relative value of angular velocity of each wheel to the angular velocity of the directly detected wheel or an average value of angular velocities of all the wheels.

Described here below is a method for detecting pneumatic abnormalities of tyre on a vehicle according to the present invention (hereinafter referred to as the detection method) in each step.

In step (a) angular velocity of rotation (hereinafter referred to as angular velocity) of each wheel is measured from vehicle speed pulses produced in for ABS by using angular velocity detecting means such as a pulse counter. In the step (b), signals proportional to the angular velocities are produced by using angular velocity signal producing means such as a D/A (Digital & Analogue) converter, and the angular velocity of each wheel is always monitored.

In step (c), a pneumatic pressure detecting/measuring means such as a pressure transducer or the like is mounted on one of the wheels to obtain directly the pneumatic pressure. In step (d), a signal proportional to the pneumatic pressure is produced continuously by the use of a direct current amplifier or the like.

In step (e), at first the pneumatic pressure of wheel A monitored in step (d), (A is the wheel on which the pneumatic detecting means is mounted) is compared with a predetermined normal value. If the difference between the detected pneumatic pressure and the normal value is equal to or greater than 0.3 kg/cm², a warning device for a pneumatic abnormality is operated. Since the pneumatic pressure of wheel A is directly detected, deflation of any pair of the wheels including wheel A, including deflation of all the wheels may be detected and warned. Table 1 shows the dependency of the angular velocities of the tyre (wheel A) on pneumatic pressure and speed.

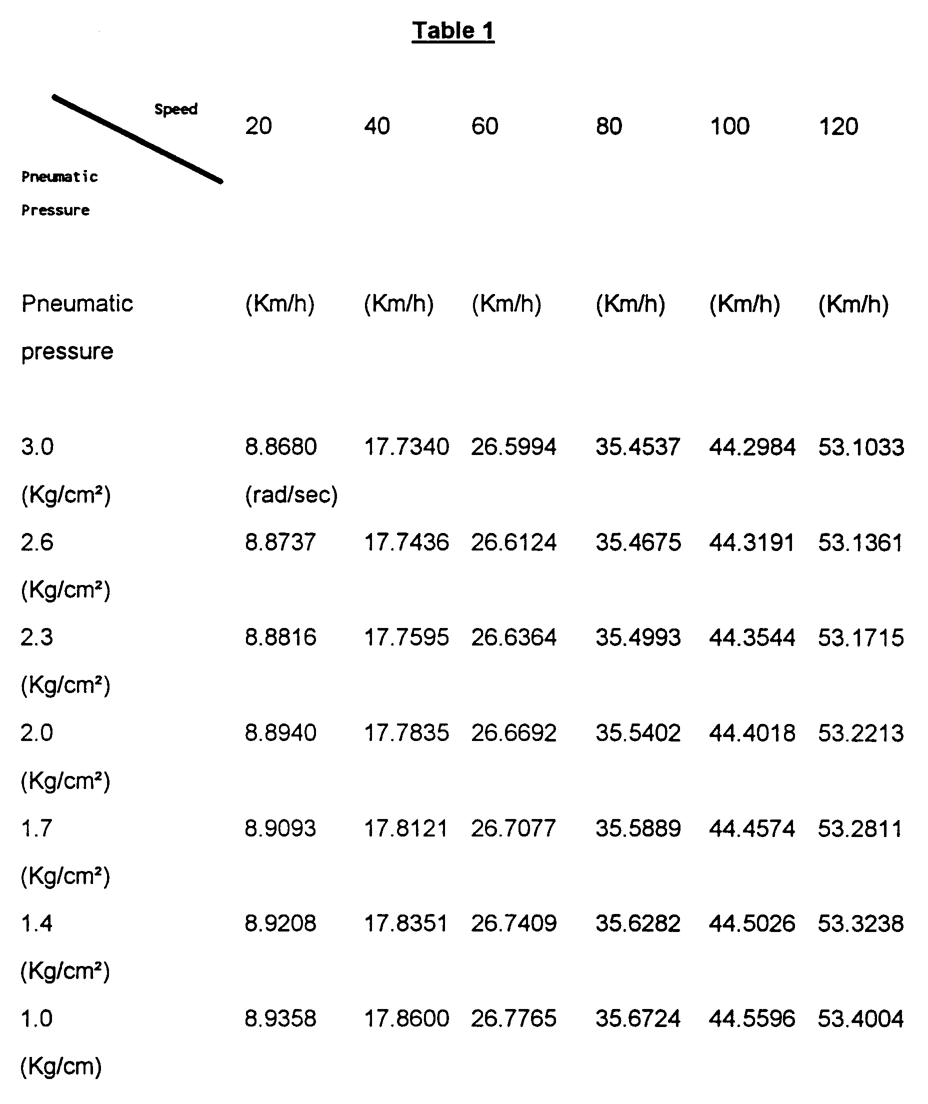

When deflation of wheel A is not detected, the ratios of the angular velocity of wheel A to the respective angular velocities of the other wheels are obtained. These ratios are compared with the values in a table and the device warns of abnormalities of a tyre when the difference between the compared ratios ranges from 0.05 % to 0.06 %. Further, an average value for the angular velocity of all the wheels detected in step (a) is obtained and compared with the respective angular velocities of the other wheels. The device preferably warns of abnormalities of a tyre when the difference ranges from 0.05 % to 0.6%. Thus deflation of any couple of wheels except wheel A are detected and signalled.

Warning can be performed by using buzzers or the like which appeal to the ears or by using lamps or the like which appeal to the eyes.

In step (e), a table is required wherein the angular velocity pitch is fixed and ratios of angular velocity of each wheel to the normal angular velocity of wheel A at each range of the pitch are shown. Such a table can be prepared by driving on a straight course at each specific speed under normal pneumatic pressure and obtaining ratios for angular velocities at each specific speed. An example of such table is Table II. The pneumatic pressure measuring means was mounted on the front left wheel for Table II.

**Table II**

| | 20 (km/h) | 40 (km/h) | 60 (km/h) | 80 (km/h) | 100 (km/h) | 120 (km/h) |
|---|---|---|---|---|---|---|
| Front left wheel | 1.00000 | 1.00000 | 1.00000 | 1.00000 | 1.00000 | 1.00000 |
| Front right wheel | 1.00151 | 1.00151 | 1.00152 | 1.00152 | 1.00153 | 1.00153 |
| Rear left wheel | 0.99783 | 0.99776 | 0.99767 | 0.99756 | 0.99745 | 0.99732 |
| Rear right wheel | 0.99933 | 0.99927 | 0.99918 | 0.99908 | 0.99898 | 0.99885 |

As described above, according to the present invention, deflation of any pair of the wheels, including deflation of all the four wheels, can be detected. Combination deflation is detected by judgement of which wheel(s) is deflated using in combination Table I and Table II. An embodiment is as follows when the pneumatic pressure of wheel A under normal condition is 2.0 Kg/cm².

At first the pneumatic pressure is measured by a pressure transducer and the like, and the measured value is compared with a predetermined normal value so that it is judged whether wheel A is normal or not.
1. When the pneumatic pressure of wheel A is found to be normal, the vehicle speed is obtained from Table I by using the pneumatic pressure of wheel A detected in step (c) and the angular velocity of wheel A detected in step (a). Then, ratio of the angular velocity of each wheel under normal condition at the speed is obtained from Table II.
   The angular velocity of each wheel detected in step (a) is divided by the angular velocity of wheel A then, the obtained ratio is compared with the ratio of angular velocity for each wheel under normal condition so that it is judged whether each wheel is normal or not.
2. When the pneumatic pressure of wheel A is abnormal the vehicle speed is obtained from Table I by using the pneumatic pressure of wheel A detected in step (c) and an angular velocity for wheel A detected in step (a). Then, a ratio of the angular velocity of each wheel under normal condition at the speed is obtained in Table II.
   An angular velocity is obtained from Table I at the vehicle speed obtained as stated above when the pneumatic pressure of wheel A is normal (2.0 Kg/cm²). the angular velocity of each wheel detected in step (a) is divided by this angular velocity for wheel A. Then the obtained ratio is compared with the ratio of the angular velocity of each wheel under the normal condition so that it can be judged whether each wheel is normal or not.

The angular velocity detected in step (a) changes with causes other than deflation of a tyre, such as turning, acceleration or speed reduction and the like, which makes the device warning of abnormality of a tyre operate wrongly. The method and the device for detecting pneumatic abnormalities of a tyre of the present invention, including a method and a device preventing such wrong warnings, is described here below.

In this method the determination of turning and, acceleration or deceleration of a vehicle is performed not by calculating the angular velocity of each tyre, but by directly measuring the accelerations of the vehicle in the lateral direction and in the forward or backward direction, whereby abnormal values can be surely eliminated.

In a step (g), the acceleration of the vehicle in the lateral direction is measured by a lateral acceleration sensor mounted on the vehicle to be monitored with a microcomputer or the like. As a lateral acceleration sensor, for example, a piezo-electric acceleration transducer or a strain gauge acceleration transducer or the like can be used. These sensors can directly measure the acceleration of the vehicle in the lateral direction without using information from any tyre such as the angular velocity of each tyre. Hence, the acceleration in the lateral direction can be measured accurately, independently of the status of the tyres.

On the other hand the angular velocity of each tyre is measured by a rotation pulse generator or the like which is continuously monitored by a microcomputer or the like.

In the step (h), the data for the angular velocity of each wheel is automatically eliminated by using a microcomputer or the like when acceleration in the lateral direction exceeds 0.06 g so that deflation of tyres is only detected by using data which is not eliminated. When the acceleration in the lateral direction exceeds 0.06 g, the obtained data cannot be used because a cause other than deflation of a tyre, such as turning of the vehicle may make differences in angular velocity between the inner wheels and the outer wheels which makes the warning device operate wrongly.

Instead of acceleration in the lateral direction, it is also possible in step (i) to measure the acceleration of the vehicle in the forward or backward directions by a forward-backward acceleration sensor mounted on the vehicle which monitors continuously to a microcomputer or the like. Thus the forward-backward acceleration sensor, for example, a piezo-electric acceleration transducer or a strain gauge acceleration transducer can be used. These sensors can directly measure the acceleration of the vehicle in the forward or backward direction without using information from the tyres such as the angular velocity of a tyre. Hence, the acceleration in the forward or backward direction can be measured accurately, irrelevant of the status of the tyres.

Then, in a step (j), the data for the angular velocity of each wheel is automatically eliminated by using a microcomputer or the like when the acceleration in the forward or backward direction exceeds 0.03 g so that deflation of the tyres is detected by using only data which is not eliminated. When the acceleration in the forward or backward direction exceeds 0.03 g, the obtained data cannot be used because, causes other than deflation of a tyre, such as tyre slip caused by driving or braking make differences in the angular velocities of the tyres.

Further, in a step (k), it is preferable that the data for the angular velocity of each wheel is automatically eliminated by using a microcomputer or the like when the vehicle brake pedal is pressed. When the braking pedal is pressed, the obtained data cannot be used because tyre slip caused by braking makes differences among the angular velocities of the tyres.

Also, as another method, in a step (1), the throttle opening is measured with a sensor such as a throttle sensor. The measured value is differentiated by using a differentiating circuit, a microcomputer or the like and is continuously monitored by a microcomputer or the like. Then, in a step (m), the differentiated value exceeds 100 %/sec; the data for the angular velocity of each tyre is automatically eliminated by using a microcomputer or the like. When the differentiated value exceeds 100 %/sec; the obtained data cannot be used because tyre slip makes differences among the angular velocities of the tyres, which makes the warning device operate wrongly.

As well as the above ways individually, it is possible to combine two or three of the ways, and also to use all the four ways. Thus, the abnormal values can be eliminated more accurately than by using the ways individually.

According to the above ways, the condition for eliminating abnormal values such as vehicle acceleration can be directly obtained without the use of information from the tyres so that abnormal values can be eliminated irrelevant of the status of each tyre.

The detection method of the present invention utilises wheel pulses in the ABS so that the reliability of the method is high and the cost of the method is decreased. Deflation of one of the wheels is directly detected by a pneumatic pressure detecting means, and deflation of the other wheels are detected by using the relative value of angular velocity for each wheel to the angular velocity of the detected wheel or an average value of angular velocities of all the wheels. Consequently, direct detecting means is mounted on only one wheel, which minimises the cost of the device and prevents complications of the device, and the invention can accurately detect and warn deflation of any pair of the wheels including deflation of all the wheels.

Though several embodiments of the present invention are described above, it is to be understood that the present invention is not limited only to the above-mentioned and various changes and modifications may be made in the invention without departing from the terms of the claims.

## Claims

1. A method for detecting pneumatic abnormalities of a tyre on a vehicle, the method comprising the steps of
(a) detecting the angular velocity of each wheel,
(b) producing signals proportional to the detected angular velocities,
characterised by
(c) directly measuring the pneumatic pressure of only one wheel of the vehicle,
(d) producing a signal proportional to the detected pneumatic pressure, and
(e) arithmetically processing the signals produced in the steps (b) and (d),
wherein the respect of the directly detected wheel, the step (e) comprises:-
operating a device which warns of a pneumatic abnormality of a tyre when the difference between the detected pneumatic pressure and the predetermined normal pneumatic pressure is not less than 0.3 Kg/cm² and wherein with respect to the other wheels, when the detected pneumatic pressure is normal,
obtaining ratios of the respective angular velocities of the other wheels to the angular velocity of the directly detected wheel,
comparing the ratios obtained with a ratio for a table of wheel angular velocity of the detected wheel in step (c),
comparing the angular velocity of the other wheel and an average value of angular velocities of all the wheels, and
operating a device which warns the pneumatic abnormalities of tyre when the difference between the compared ratios ranges from 0.05% to 0.60% or when the difference between the angular velocity of the other wheel and an average value of angular velocities of all the wheels ranges from 0.05% to 0.06%,
the method further comprising a step (f) of:
when a pneumatic abnormality of the directly measured wheel is warned obtaining a vehicle speed from a table wherein the relation between pneumatic pressure and angular velocity is shown,
obtaining an angular velocity for the directly detected wheel under normal pneumatic pressure, corresponding to the obtained vehicle speed, and
obtaining ratios of respective angular velocities of the other wheels to this angular velocity so that the deflated tyre can be identified.

2. The method of claim 1, characterised in that the method further includes steps of:
(g) directly measuring and monitoring the acceleration of the vehicle in a lateral direction, and
(h) invalidating the data for the angular velocity of each wheel when an absolute value of the acceleration in the lateral direction exceeds 0.06g.

3. The method of claim 1 or 2, characterised in that the method further includes the steps of:
(i) directly measuring and monitoring the acceleration of the vehicle in a forward or backward direction, and
(j) invalidating the data for the angular velocity of each wheel when the absolute value of acceleration in the forward or backward direction exceeds 0.03g.

4. The method of any of claims 1 to 3, characterised in that the method further includes a step
(k) of invalidating the data for the angular velocity of each wheel when the vehicle brake pedal is pressed.

5. The method of any of claims 1 to 4, characterised in that the method further includes the step of:
(l) measuring the throttle opening, differentiating the measured values, monitoring the differentiated value, and (m) invalidating the data for the angular velocity of each wheel when the differentiated value exceeds 100%/sec.

6. A device for detecting pneumatic abnormalities of a tyre on a vehicle comprising
angular velocity detecting means for detecting an angular velocity for each wheel,
angular velocity signal producing means for producing signals proportional to the detected angular velocities,
characterised by
pneumatic pressure measuring means for directly measuring only one wheel of the vehicle,
pneumatic pressure signal producing means for producing a signal proportional to the measured pneumatic pressure,
arithmetical processing means for arithmetically processing the signals from the angular velocity signal producing means and the pneumatic pressure signal producing means,
wherein with respect to the directly detected wheel, the arithmetical processing means operates a device which warns of a pneumatic abnormality of a tyre when the difference between the detected pneumatic pressure and a predetermined normal pneumatic pressure is not less than 0.3 Kg/cm², and
wherein with respect of the other wheels, when the detected pneumatic pressure is normal, the arithmetical processing means obtains ratios for the respective angular velocities of the other wheels to an angular velocity of the directly detected wheel,
compares the ratios with a ratio in a table of wheel angular velocity ratio under the normal inflation condition on the basis of the angular velocity of the directly measured wheel,
compares the angular velocity of the other wheel and an average value of angular velocities of all the wheels, and
operated a device which warns of a pneumatic abnormality of tyre when the difference between the compared ratios ranges from 0.05% to 0.60% or when the difference between the angular velocity of the other wheel and an average value of angular velocities of all the wheels ranges from 0.05% to 0.60%,
and the device further includes an identifying means wherein
when pneumatic pressure of the directly detected wheel is abnormal, the means obtains a vehicle speed from a table wherein the relation between pneumatic pressure and angular velocity is shown,
obtains an angular velocity for the directly measured wheel under normal pneumatic pressure, corresponding to the speed, and
obtains ratios of respective angular velocities of the other wheels to this angular velocity so that the deflated tyre can be identified.

7. The device of claim 6 characterised in that the device further includes:
means for directly measuring and monitoring acceleration of the vehicle in a lateral direction, and
means for invalidating the data for the angular velocity of each wheel when the absolute value of the acceleration in the lateral direction exceeds 0.06g.

8. The device of claims 6 or 7, characterised in that the device further includes:
means for directly measuring and monitoring the acceleration of a vehicle in a forward or backward direction, and
means for invalidating the data for the angular velocity of each wheel when the absolute value of the acceleration in the forward or backward direction exceeds 0.03g.

9. The device of any one of claims 6 to 8, characterised in that the device further includes:
means for invalidating the data for the angular velocity of each wheel when a vehicle brake pedal is pressed.

10. The device of any one of claims 6 to 9, characterised in that the device further includes:
means for measuring the throttle opening, differentiating the measured value, and monitoring the differentiated value and
means for invalidating the data for the angular velocity of each wheel when the differentiated value exceeds 100%/sec.

## Patentansprüche

1. Ein Verfahren zum Detektieren von Luftanomalien eines Reifens auf einem Fahrzeug, wobei das Verfahren die Schritte umfaßt, daß
(a) die Winkelgeschwindigkeit jedes Rades detektiert wird,
(b) Signale produziert werden, die proportional zu den detektierten Winkelgeschwindigkeiten sind,
dadurch gekennzeichnet, daß
(c) der Luftdruck von nur einem Rad des Fahrzeuges direkt gemessen wird,
(d) ein Signal produziert wird, das proportional zu dem detektierten Luftdruck ist, und
(e) die Signale, die in den Schritten (b) und (d) produziert werden, arithmetisch verarbeitet werden,
worin bezüglich des direkt detektierten Rades der Schritt (e) umfaßt, daß
eine Vorrichtung betätigt wird, welche vor einer Luftanomalie eines Reifens warnt, wenn die Differenz zwischen dem detektierten Luftdruck und dem vorbestimmten normalen Luftdruck nicht kleiner als 0,3 Kg/cm² ist, und worin bezüglich der anderen Räder, wenn der detektierte Luftdruck normal ist,
Verhältnisse der jeweiligen Winkelgeschwindigkeiten der anderen Räder zu der Winkelgeschwindigkeit des direkt detektierten Rades erhalten werden,
die erhaltenen Verhältnisse mit einem Verhältnis für eine Tabelle von Radwinkelgeschwindigkeit des in Schritt (c) detektierten Rades verglichen werden,
die Winkelgeschwindigkeit des anderen Rades und ein Durchschnittswert der Winkelgeschwindigkeiten von allen Rädern verglichen werden, und
eine Vorrichtung betätigt wird, welche vor den Luftanomalien eines Reifens warnt, wenn die Differenz zwischen den verglichenen Verhältnissen zwischen 0,05 % bis 0,60 % liegt, oder wenn die Differenz zwischen der Winkelgeschwindigkeit des anderen Rades und einem Durchschnittswert der Winkelgeschwindigkeiten aller Räder zwischen 0,05 % bis 0,06 % liegt,
wobei das Verfahren weiter einen Schritt (f) umfaßt, daß, wenn vor einer Luftanomalie des direkt gemessenen Rades gewarnt wird, eine Fahrzeuggeschwindigkeit aus einer Tabelle erhalten wird, worin die Relation zwischen Luftdruck und Winkelgeschwindigkeit gezeigt ist,
eine Winkelgeschwindigkeit für das direkt detektierte Rad unter normalem Luftdruck erhalten wird, die der erhaltenen Fahrzeuggeschwindigkeit entspricht, und
Verhältnisse von jeweiligen Winkelgeschwindigkeiten der anderen Räder zu dieser Winkelgeschwindigkeit erhalten werden, so daß der luftentleerte Reifen identifiziert werden kann.

2. Das Verfahren nach Anspruch 1,
dadurch gekennzeichnet,
daß das Verfahren weiter die Schritte umfaßt, daß
(g) direkt die Beschleunigung des Fahrzeuges in einer seitlichen Richtung gemessen und überwacht wird, und
(h) die Daten für die Winkelgeschwindigkeit jedes Rades ungültig gemacht werden, wenn ein Absolutwert der Beschleunigung in der seitlichen Richtung 0,06 g überschreitet.

3. Das Verfahren nach Anspruch 1 oder 2,
dadurch gekennzeichnet,
daß das Verfahren weiter die Schritte umfaßt, daß
(i) die Beschleunigung des Fahrzeuges in einer Richtung nach vorne oder nach hinten direkt gemessen und überwacht wird, und
(j) die Daten für die Winkelgeschwindigkeit jedes Rades ungültig gemacht werden, wenn der Absolutwert der Beschleunigung in der Richtung nach vorne oder nach hinten 0,03 g überschreitet.

4. Das Verfahren nach einem der Ansprüche 1 bis 3,
dadurch gekennzeichnet,
daß das Verfahren weiter einen Schritt umfaßt, daß
(k) die Daten für die Winkelgeschwindigkeit jedes Rades ungültig gemacht werden, wenn das Fahrzeugbremspedal gedrückt wird.

5. Das Verfahren nach einem der Ansprüche 1 bis 4,
dadurch gekennzeichnet,
daß das Verfahren weiter den Schritt umfaßt, daß
(l) die Drosselklappenöffnung gemessen wird, die gemessenen Werte differenziert werden, der differenzierte Wert überwacht wird, und (m) die Daten für die Winkelgeschwindigkeit jedes Rades ungültig gemacht werden, wenn der differenzierte Wert 100 %/sec überschreitet.

6. Eine Vorrichtung zum Detektieren von Luftanomalien eines Reifens auf einem Fahrzeug mit Winkelgeschwindigkeitsdetektionsmitteln zum Detektieren einer Winkelgeschwindigkeit für jedes Rad,
Winkelgeschwindigkeitssignalproduktionsmitteln zum Produzieren von Signalen, die proportional zu den detektierten Winkelgeschwindigkeiten sind,
gekennzeichnet durch
Luftdruckmeßmittel zum direkten Messen nur eines Rades des Fahrzeuges,
Luftdrucksignalproduktionsmittel zum Produzieren eines Signals, das proportional zu dem gemessenen Luftdruck ist,
arithmetische Verarbeitungsmittel zum arithmetischen Verarbeiten der Signale von den Winkelgeschwindigkeitssignalproduktionsmitteln und den Luftdrucksignalproduktionsmitteln,
worin bezüglich des direkt detektierten Rades das arithmetische Verarbeitungsmittel eine Vorrichtung betätigt, welche vor einer Luftanomalie eines Reifens warnt, wenn die Differenz zwischen dem detektierten Luftdruck und einem vorbestimmten normalen Luftdruck nicht kleiner als 0,3 Kg/cm² ist, und
worin bezüglich der anderen Räder, wenn der detektierte Luftdruck normal ist, das arithmetische Verarbeitungsmittel Verhältnisse für die jeweiligen Winkelgeschwindigkeiten der anderen Räder zu einer Winkelgeschwindigkeit des direkt detektierten Rades erhält,
die Verhältnisse mit einem Verhältnis in einer Radwinkelgeschwindigkeitsverhältnistabelle unter dem normalen aufgepumpten Zustand auf der Basis der Winkelgeschwindigkeit des direkt gemessenen Rades vergleicht,
die Winkelgeschwindigkeit des anderen Rades und einen Durchschnittswert der Winkelgeschwindigkeiten aller Räder vergleicht, und
eine Vorrichtung betätigt, die vor einer Luftanomalie eines Reifens warnt, wenn die Differenz zwischen den verglichenen Verhältnissen zwischen 0,05 % bis 0,60 % liegt, oder wenn die Differenz zwischen der Winkelgeschwindigkeit des anderen Rades und einem Durchschnittswert der Winkelgeschwindigkeiten aller Räder zwischen 0,05 % und 0,60 % liegt,
und die Vorrichtung weiter ein Identifikationsmittel umfaßt, worin,
wenn der Luftdruck des direkt detektierten Rades abnormal ist, das Mittel eine Fahrzeuggeschwindigkeit aus einer Tabelle erhält, worin die Relation zwischen Luftdruck und Winkelgeschwindigkeit gezeigt ist,
eine Winkelgeschwindigkeit für das direkt gemessene Rad unter normalem Luftdruck erhält, die der Geschwindigkeit entspricht, und
Verhältnisse von jeweiligen Winkelgeschwindigkeiten der anderen Räder zu dieser Winkelgeschwindigkeit erhält, so daß der luftentleerte Reifen identifiziert werden kann.

7. Die Vorrichtung nach Anspruch 6,
dadurch gekennzeichnet, daß die Vorrichtung weiter Mittel zum direkten Messen und Überwachen der Beschleunigung des Fahrzeuges in einer seitlichen Richtung, und
Mittel zum Ungültigmachen der Daten für die Winkelgeschwindigkeit jedes Rades, wenn der Absolutwert der Beschleunigung in der seitlichen Richtung 0,06 g überschreitet, umfaßt.

8. Die Vorrichtung nach Anspruch 6 oder 7,
dadurch gekennzeichnet, daß die Vorrichtung weiter Mittel zum direkten Messen und Überwachen der Beschleunigung eines Fahrzeuges in einer Richtung nach vorne oder nach hinten, und
Mittel zum Ungültigmachen der Daten für die Winkelgeschwindigkeit jedes Rades, wenn der Absolutwert der Beschleunigung in der Richtung nach vorne oder nach hinten 0,03 g überschreitet, umfaßt.

9. Die Vorrichtung nach einem der Ansprüche 6 bis 8, dadurch gekennzeichnet, daß die Vorrichtung weiter Mittel zum Ungültigmachen der Daten für die Winkelgeschwindigkeit jedes Rades, wenn ein Fahrzeugbremspedal gedrückt wird, umfaßt.

10. Die Vorrichtung nach einem der Ansprüche 6 bis 9, dadurch gekennzeichnet, daß die Vorrichtung weiter Mittel zum Messen der Drosselklappenöffnung, zum Differenzieren des gemessenen Wertes und zum Überwachen des differenzierten Wertes und
Mittel zum Ungültigmachen der Daten für die Winkelgeschwindigkeit jedes Rades, wenn der differenzierte Wert 100 %/sec überschreitet, umfaßt.

## Revendications

1. Procédé de détection d'anomalies pneumatiques d'un pneumatique monté sur un véhicule, le procédé comprenant les étapes suivantes :
(a) la détection de la vitesse angulaire de chaque roue, et
(b) la production de signaux proportionnels aux vitesses angulaires détectées,
caractérisé par
(c) la mesure directe de la pression pneumatique d'une seule roue du véhicule,
(d) la production d'un signal proportionnel à la pression pneumatique détectée, et
(e) le traitement arithmétique des signaux produits dans les étapes (b) et (d),
dans lequel, pour la roue détectée directement, l'étape (e) comprend :
la commande d'un dispositif qui donne un avertissement d'anomalies pneumatiques d'un pneumatique lorsque la différence entre la pression pneumatique détectée et la pression pneumatique normale prédéterminée n'est pas inférieure à 0,3 kg/cm² et, pour les autres roues, lorsque la pression pneumatique détectée est normale,
l'obtention de rapports des vitesses angulaires respectives des autres roues et de la vitesse angulaire de la roue détectée directement,
la comparaison des rapports obtenus avec un rapport tiré d'une table de vitesses angulaires de roue pour la roue détectée dans l'étape (c),
la comparaison de la vitesse angulaire de l'autre roue et d'une valeur moyenne des vitesses angulaires de toutes les roues, et
la commande d'un dispositif qui avertit d'anomalies pneumatiques du pneumatique lorsque la différence entre les rapports comparés est comprise entre 0,05 et 0,60 % ou lorsque la différence entre la vitesse angulaire de l'autre roue et une valeur moyenne des vitesses angulaires de toutes les roues est comprise entre 0,05 et 0,60 %,
le procédé comprenant en outre une étape (f) qui comprend :
lorsqu'une anomalie pneumatique de la roue directement mesurée est indiquée, l'obtention d'une vitesse du véhicule dans une table dans laquelle est présentée la relation entre la pression pneumatique et la vitesse angulaire,
l'obtention d'une vitesse angulaire de la roue détectée directement à la pression pneumatique normale correspondant à la vitesse obtenue du véhicule, et
l'obtention de rapports des vitesses angulaires respectives des autres roues et de cette vitesse angulaire afin que le pneumatique dégonflé puisse être identifié.

2. Procédé selon la revendication 1, caractérisé en ce que le procédé comporte en outre les étapes suivantes :
(g) la mesure directe et le contrôle de l'accélération du véhicule en direction latérale, et
(h) l'invalidation des données de vitesse angulaire de chaque roue lorsqu'une valeur absolue de l'accélération en direction latérale dépasse 0,06 g.

3. Procédé selon la revendication 1 ou 2, caractérisé en ce que le procédé comprend en outre les étapes suivantes :
(i) la mesure directe et le contrôle de l'accélération du véhicule vers l'avant ou vers l'arrière, et
(j) l'invalidation des données de vitesse angulaire de chaque roue lorsque la valeur absolue de l'accélération vers l'avant ou vers l'arrière dépasse 0,03 g.

4. Procédé selon l'une quelconque des revendications 1 à 3, caractérisé en ce que le procédé comprend en outre l'étape suivante
(k) l'invalidation des données de vitesse angulaire de chaque roue lorsque la pédale de frein du véhicule est enfoncée.

5. Procédé selon l'une quelconque des revendications 1 à 4, caractérisé en ce qu'il comporte en outre les étapes suivantes :
(l) la mesure de l'ouverture du papillon des gaz, la différentiation des valeurs mesurées, le contrôle de la valeur différentiée et
(m) l'invalidation des données de vitesse angulaire de chaque roue lorsque la vitesse différentiée dépasse 100 %/s.

6. Appareil de détection des anomalies pneumatiques d'un pneumatique monté sur un véhicule, comprenant
un dispositif de détection de vitesse angulaire destiné à détecter une vitesse angulaire de chaque roue, et
un dispositif de production de signaux de vitesses angulaires destiné à produire des signaux proportionnels aux vitesses angulaires détectées,
caractérisé par
un dispositif de mesure de la pression pneumatique destiné à mesurer directement cette pression sur une roue seulement du véhicule,
un dispositif de production de signaux de pression pneumatique destiné à produire un signal proportionnel à la pression pneumatique mesurée,
un dispositif de traitement arithmétique des signaux du dispositif producteur de signaux de vitesses angulaires et du dispositif producteur de signaux de pression pneumatique,
dans le cas de la roue détectée directement, le dispositif de traitement pneumatique commandant un dispositif qui donne un avertissement d'anomalies pneumatiques d'un pneumatique lorsque la différence entre la pression pneumatique détectée et une pression pneumatique normale prédéterminée n'est pas inférieure à 0,3 kg/cm², et
dans le cas des autres roues, lorsque la pression pneumatique détectée est normale, le dispositif de traitement arithmétique obtient des rapports pour les vitesses angulaires respectives des autres roues et de la vitesse angulaire de la roue directement mesurée,
compare les rapports à un rapport d'une table de rapports de vitesses angulaires de roue dans la condition de gonflage normal d'après la vitesse angulaire de la roue mesurée directement,
compare la vitesse angulaire de l'autre roue à une valeur moyenne des vitesses angulaires de toutes les roues, et
commande un dispositif donnant un avertissement d'anomalies pneumatiques d'un pneumatique lorsque la différence entre les rapports comparés est comprise entre 0,05 % et 0,60 % ou lorsque la différence entre la vitesse angulaire de l'autre roue et une valeur moyenne des vitesses angulaires de toutes les roues est comprise entre 0,05 et 0,60 %, et
l'appareil comporte en outre un dispositif identificateur tel que
lorsque la pression pneumatique de la roue détectée directement est anormale, le dispositif tire une vitesse du véhicule d'une table dans laquelle est indiquée la relation entre la pression pneumatique et la vitesse angulaire,
obtient une vitesse angulaire pour la roue mesurée directement à la pression pneumatique normale, correspondant à la vitesse, et
obtient des rapports des vitesses angulaires respectives des autres roues à cette vitesse angulaire afin que le pneumatique dégonflé puisse être identifié.

7. Appareil selon la revendication 6, caractérisé en ce qu'il comporte en outre :
un dispositif destiné à mesurer directement et à contrôler l'accélération du véhicule en direction latérale, et
un dispositif destiné à invalider les données de vitesse angulaire de chaque roue lorsque la vitesse absolue de l'accélération en direction latérale dépasse 0,06 g.

8. Appareil selon la revendication 6 ou 7, caractérisé en ce qu'il comporte en outre :
un dispositif destiné à mesurer directement et contrôler l'accélération d'un véhicule vers l'avant ou vers l'arrière, et
un dispositif destiné à invalider les données de vitesse angulaire de chaque roue lorsque la valeur absolue de l'accélération vers l'avant ou vers l'arrière dépasse 0,03 g.

9. Appareil selon l'une quelconque des revendications 6 à 8, caractérisé en ce qu'il comporte en outre un dispositif destiné à invalider les données de vitesse angulaire de chaque roue lorsque la pédale de frein du véhicule est enfoncée.

10. Appareil selon l'une quelconque des revendications 6 à 9, caractérisé en ce que l'appareil comporte en outre :
un dispositif de mesure de l'ouverture du papillon des gaz, de différentiation de la valeur mesurée et de contrôle de la valeur différentiée, et
un dispositif destiné à invalider les données de vitesse angulaire de chaque roue lorsque la valeur différentiée dépasse 100 %/s.
